# EUROPÄISCHE PATENTSCHRIFT

(11) **EP 2 162 632 B1**
(45) Veröffentlichungstag und Bekanntmachung des Hinweises auf die Patenterteilung: **11.06.2014**
(21) Anmeldenummer: 08749066.0
(22) Anmeldetag: 23.04.2008
(51) Int. Cl.: F16D 69/02, F16D 13/62

(54) **BELAGTRÄGER, BREMSE, KUPPLUNG ODER ELEKTROMOTOR**
LINING SUPPORT, BRAKE, CLUTCH AND ELECTRIC MOTOR
SUPPORT DE GARNITURE, FREIN, EMBRAYAGE OU MOTEUR ÉLECTRIQUE

(30) Priorität: 15.05.2007 DE 102007022987
(43) Veröffentlichungstag der Anmeldung: 17.03.2010
(73) Patentinhaber: SEW-EURODRIVE GmbH & Co. KG, 76646 Bruchsal (DE)
(72) Erfinder: PFANN, Jochen, 76189 Karlsruhe (DE); SCHÜLER, Gerd, 56291 Badenhard (DE)
(86) Internationale Anmeldenummer: PCT/EP2008/003265
(87) Internationale Veröffentlichungsnummer: WO 2008/138458

(56) Entgegenhaltungen:
- EP-A- 0 300 756
- EP-A- 0 957 281
- WO-A-92/08909
- BE-A6- 1 016 421
- DE-C1- 3 718 647
- FR-A- 2 626 518

## Beschreibung

Die Erfindung betrifft eine elektromagnetische betätigbare Bremse oder Kupplung **und** einen Elektromotor mit einer solchen Bremse oder Kupplung.

Aus der EP 0 112 439 B1 sind spezielle Anodisierverfahren bekannt, die sich auf Aluminium-Werkstücke zur Erzeugung abriebfester Beläge anwenden lassen. Allerdings betragen die Schichtdicken nur einige Hundertstel Millimeter.

### Aus der BE 1 016 421 A6 ist ein Belagträger für eine elektromagnetisch betätigbare Bremse bekannt.

Bei industriell einsetzbaren Elektromotoren, welche eine Leistung von beispielhaft 1 kW und mehr aufweisen, sind zugehörige elektromagnetisch betätigbare Bremsen bekannt, die einen Belagträger umfassen. Dabei ist der am Belagträger vorgesehene Belag aus organischen Stoffen, beispielsweise auf Grundlage von Phenolharzen, gefertigt und weist eine Schichtdicke im Bereich von mehr als beispielhaft 3 mm auf. Beim Einfallen der Bremse wird der mit der Rotorwelle des Elektromotors oder der Welle der Bremse formschlüssig verbundene Belag in Reibkontakt mit einem nichtdrehenden metallischen Teil gebracht und somit die Bremskraft erzeugt. Die entstehende Reibungswärme wird großenteils an das nichtdrehende Teil abgeführt, da der organische Belag ein schlechter Wärmeleiter ist im Gegensatz zu dem metallischen nichtdrehenden Teil.

### Aus der DE 37 18 647 C1 ist eine Bremsscheibe für eine Scheibenbremse eines Kraftfahrzeugs bekannt, wobei Teilbereiche der Oberfläche mit Induktionshärten, Elektronenstahlhärten oder Laserstrahlhärten gehärtet ist.

Der Erfindung liegt die Aufgabe zugrunde, Antriebskomponenten, wie Bremsen für Elektromotoren und Kupplungen für Antriebe, kompakt weiterzubilden, wobei die Standzeit erhöht sein soll.

Erfindungsgemäß wird die Aufgabe bei der elektromagnetisch betätigbaren Bremse oder Kupplung mit Belagträger nach den in Anspruch 1 und bei dem Elektromotor nach den in Anspruch 5 angegebenen Merkmalen gelöst.

Von Vorteil ist dabei, dass der Belagträger in einem Teilbereich gehärtet wird und somit sehr kompakt aufbaubar ist. Außerdem ist die Standzeit hoch, weil die Verbindung der Härteschicht und des Grundmaterials ohne Klebeflächen oder andere Zwischenbereiche auskommt, die als Sollbruchstelle fungieren können. Das Material ist als nur in einem Teilbereich mittels des Härteverfahrens geändert und somit ist der Belagträger aus einem einzigen Stück fertigbar.

Wenn als Belagträger Aluminium als Grundmaterial gewählt ist, ist die Reibkontaktwärme in den Belagträger hinein besser abführbar als bei Verwendung eines Belagträgers aus Stahl, auf den ein organischer Bremsbelag aufgebracht ist, insbesondere mit einer Schichtdicke von etwa 1 bis 3 mm.

Der Bremsbelag ist zum Reibkontakt mit einem Stahlteil oder einem Keramikteil verwendet. Von Vorteil ist dabei, dass die Härteschicht in Reibkontakt mit einem Stahlteil, Aluminiumteil oder sonstigen metallischen Teil, das die Wärme besonders gut abführen kann, tritt oder alternativ in Reibkontakt mit einem Keramikteil tritt, das sehr geringen Verschleiß aufweist und eine hohe Temperaturbeständigkeit aufweist. Somit sind hohe Standzeiten erreichbar. Ein weiterer Vorteil der Erfindung liegt auch darin, dass die Geräuschbildung beim Bremsen verminderbar ist. Denn der die Härteschicht ist direkt aus dem Grundmaterial herausgewachsen und somit werden die hohen Frequenzen direkt von der Härteschicht ins Grundmaterial übertragen. Dieses ist vorzugsweise ein Metall wie Aluminium oder Stahl und dämpft somit die hohen Frequenzen besser ab als es ein entsprechendes Keramikteil ausführen würde. Insgesamt ist also die Geräuschbildung verminderbar.

Die gehärtete Schicht weist eine Schichtdicke zwischen 10 und 100µm, auf, bei einer vorteilhaften Ausgestaltung zwischen 10 und 60µm, insbesondere 20 bis 40 µm. Überraschenderweise reicht diese dünne Schicht für eine etwa gleichlange Standzeit aus verglichen mit einem gleichgroßen Belagträger, der mit organischem Belag von 3 mm Dicke ausgeführt ist. Von Vorteil ist dabei, dass die Schicht sehr dünn ist und damit keine wesentliche Erhöhung des Massenträgheitsmoments bewirkt. Außerdem ist die Wärme direkt und schnell ins Grundmaterial abführbar. Ebenso sind akustische Wellen direkt ins an die Härteschicht angrenzende Grundmaterial abführbar und dort bedämpfbar. Außerdem ist zwar das Material der Härteschicht als sprödes Material ausführbar, wie beispielsweise Keramik, jedoch wirkt sich dies nicht verkürzend auf die Standzeit aus, da die Anbindung der Härteschicht ans Grundmaterial ideal ausgeführt ist. Bei Schichtdicken über 100µm ist jedoch eine Verminderung der Standzeit vorhanden. Außerdem hält die erfindungsgemäß dünne Härteschicht Kräften, die von außen wirken besser stand als bei dicker Ausführung der Härteschicht. Dies gilt auch für Querkraft- oder Axialkrafteinwirkungen. Außerdem sind solche Krafteinwirkungen auch durch thermischen Stress, also Temperaturhübe bewirkt. Wenn nämlich die Temperaturen wechseln, wie beispielsweise beim Einfallen der Bremse, dehnen sich die Härteschicht und das Grundmaterial verschieden stark aus. Trotzdem platzt die Härteschicht nicht ab, solange ihre Schichtdicke im angegebenen erfindungsgemäßen Bereich bleibt.

Der Belagträger ist einstückig aus einem Grundmaterial gefertigt und die gehärtete Schicht ist durch anodische Oxidation des Grundmaterials erzeugt, in einem gekühlten Säureelektrolyten. Von Vorteil ist dabei, dass die Herstellung der Härteschicht einfach und kostengünstig ist. Der Belagträger muss nur diesem Verfahren unterzogen werden. Ein weiterer Vorteil ist, dass ohne großen Zusatzaufwand der gesamte Belagträger härtbar ist und somit seine gesamte Oberfläche oder zumindest alle gehärteten Oberflächenbereiche korrosionsgeschützt beschichtet sind.

Der Belagträger weist eine Innenverzahnung zur formschlüssigen und/oder drehfesten Verbindung mit einer Welle auf. Von Vorteil ist dabei, dass der Belagträger schnell und einfach austauschbar ist bei Wartung und eine sichere formschlüssige und damit drehfeste Verbindung zur drehenden Welle erreichbar ist.

Die gehärtete Schicht ist eine keramisierte oder eine Keramikschicht. Von Vorteil ist dabei, dass wegen des geringen Verschleißes und der Reibfestigkeit die Standzeit sehr hoch ist und die Temperaturen beim Bremsen ebenfalls sehr hoch vorgesehen werden dürfen.

Das Grundmaterial ist ein Metall, bei einer vorteilhaften Ausgestaltung Aluminium, Stahl oder eine Stahllegierung. Von Vorteil ist dabei, dass Wärme gut ableitbar und/oder aufspreizbar ist und das Grundmaterial eine hohe Elastizität aufweist, wodurch Kräfte auffangbar und akustische Wellen bedämpfbar sind.

Wichtige Merkmale der Erfindung bei der elektromagnetisch betätigbaren Bremse oder Kupplung mit Belagträger sind, dass der Belagträger mindestens einen Bremsbelag zum Reibkontakt mit Reibpartnern, wie Ankerscheibe und/oder ein weiteres Teil, aufweist, wobei der Bremsbelag als gehärtete Schicht des Bremsbelagträgers vorgesehen ist.

Von Vorteil ist dabei, dass die Bremse sehr kompakt aufbaubar ist. Denn der Belagträger ist viel dünner in axialer Richtung gesehen als ein Belagträger nach Stand der Technik, insbesondere bei zusätzlicher Berücksichtigung der Bremsbeläge.

Bei einer vorteilhaften Ausgestaltung wird bei stromloser Bremsspule der Belagträger von einer von Federn beaufschlagten Ankerscheibe gegen ein eine Bremsfläche aufweisendes Teil, insbesondere Bremslagerschild, gedrückt. Von Vorteil ist dabei, dass die Erfindung bei Bremsen anwendbar ist, bei denen die Ankerscheibe bei Bestromung von einer Bremsspule angezogen wird und erst bei Nichtbestromung der Bremsspule von Federn auf den Belagträger gedrückt wird und dieser wiederum auf eine Gegenbremsfläche eines weiteren Teils, wie beispielsweise Bremslagerschild.

Bei einer vorteilhaften Ausgestaltung ist zumindest die Ankerscheibe und das weitere Teil, insbesondere Bremslagerschild, zur Abfuhr der Bremswärme und entsprechend wärmeleitend mit der Umgebung oder zumindest einem Gehäuseteil vorgesehen. Von Vorteil ist dabei, dass die Reibwärme einerseits über die Reibpartner abführbar ist, andererseits aber auch ein Teil des Wärmestroms über den Belagträger zumindest aufspreizbar ist.

Der Belagträger ist mit einer Welle der Bremse oder der Kupplung mit einer Innenverzahnung drehfest und/oder formschlüssig verbunden. Vorteiligerweise ist somit Schlupf verhindert.

Von Vorteil ist dabei, dass der Motor kompakt ausführbar ist mit einem oben beschriebenen Belagträger in der vom Motor umfassten Bremse oder Kupplung.

Weitere Vorteile ergeben sich aus den Unteransprüchen.

### Bezugszeichenliste

- 1: Bremsspule
- 2: Spulenkern
- 3: Druckfeder
- 4: Rotationsachse
- 5: Belagträger
- 6: Bremsbelag
- 7: Ankerscheibe
- 8: Dämpfungselement
- 9: Stahlblech
- 10: Bremse

Die Erfindung wird nun anhand von Abbildungen näher erläutert:

Die Erfindungen ist auf Bremsen, bei denen ein Belagträger mit Bremsbelag in Reibkontakt bringbar ist, und ebenso auf Reibkupplungen, bei denen ebenfalls ein Belag in Reibkontakt bringbar ist, anwendbar.

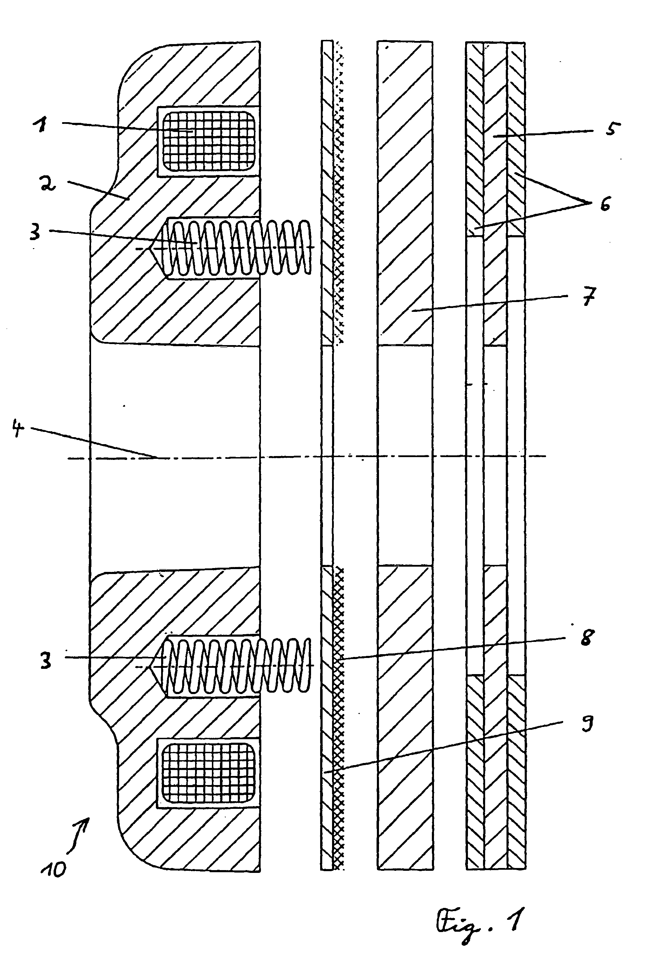

In der Figur 1 ist eine erfindungsgemäße Bremse schematisch in Schnittansicht gezeichnet.

Die Bremse ist entsprechend der Figur 1 der EP 0 957 281 A2 aufgebaut, wobei für die hier vorliegende Erfindung das Dämpfungselement nicht notwendig ist.

Zum Lüften der Bremse wird die Bremsspule 1 bestromt und somit die Ankerscheibe axial in Richtung des Spulenkerns 2 bewegt entgegen der Federkraft der Druckfedern 3. Zum Einfallen der Bremse wird der Spulenstrom ausgeschaltet und die Druckfedern 3 drücken demzufolge die Ankerscheibe in Richtung auf den Bremsbelag 6 des mit der Rotorwelle drehfest verbundenen, insbesondere formschlüssig verbundenen Belagträgers 5. Auf der der Ankerscheibe abgewandten Seite des Belagträgers 5b ist ein in der Figur 1 nicht gezeigtes Bremslagerschild vorsehbar, so dass der drehende Belagträger 5 von der Ankerscheibe 7 gegen dieses Lagerschild gedrückt wird. Die Rotationsachse ist mit Bezugszeichen 4 gekennzeichnet. Das auf dem Stahlblech 9 angeordnete Dämpfungselement 8 dient im Wesentlichen der Geräuschdämpfung.

Der Bremsbelag ist dabei durch anodische Oxidation des Belagträgers 5 erzeugt. Vorzugsweise ist der Belagträger 5 aus Aluminium ausgeführt und wird mittels der anodischen Oxidation mit einer Hartschicht aus einer Keramik, vorzugswiese Aluminiumoxid und/oder Aluminiumhydroxid enthaltend, überzogen. Die Schichtdicke ist äußerst dünn gewählt und beträgt weniger als ein Zehntel **Millimeter**. Vorteilhaft sind Werte zwischen 10 und 60 µm. Insbesondere bei 30µm ergibt sich eine besonders vorteilhafte Ausführungsform. Da die Hartschicht während der Oxidation nicht nur nach außen sondern auch ins Innere des Materials hinein wächst, ist eine unterbrechungsfreie Anbindung der Hartschicht mit dem Grundmaterial erreicht. Daher ist eine hohe Stabilität gegen auftretende mechanische Belastungen erreicht.

Zwar ist die keramisierte Hartschicht im Gegensatz zu den organischen Belägen des Standes der Technik spröde, aber wegen der geringen Schichtdicke wirkt sich dies nicht negativ auf die Standzeit aus. Auch bei hohen auftretenden Bremskräften und Axial- und Querkräften hat sie sich als standfest erwiesen. Bei großen Schichtdicken über 100 µm hinaus wirkt die Sprödigkeit negativ auf die Standzeit.

Die dünne Hartschicht hat als weiteren Vorteil, dass die Wärme überraschend gut aufspreizbar und abführbar ist. Denn das Grundmaterial des Belagträgers, beispielsweise ein guter Wärmeleiter wie Aluminium, ist nahtlos an seiner Oberfläche mit der Hartschicht versehen und somit ist die Wärme aus dieser Schicht auch in den Belagträger hinein und nicht nur an den Reibpartner, also die Ankerscheibe oder das Bremslagerschild abführbar. Ein Teil der Wärme wird also ins Innere des bremsbelagträger abgeführt, aufgespreizt und dann abgeführt. Ein anderer Teil der Wärme wird direkt beim Bremsen an den Reibpartner abgeführt.

Außerdem ist die Schicht reibfest und verschleißarm und führt somit zu einer überraschend hohen Standzeit der Bremse.

Bei einer vorteilhaften erfindungsgemäßen Ausführungsform wird der Belagträger durch Ausstanzen aus einem gewalzten Blech erzeugt und danach der anodischen Oxidation unterzogen. Dabei wird die anodische Oxidation in einem gekühlten Säureelektrolyten spezieller Zusammensetzung ausgeführt. Die Zusammensetzung ist derart gewählt und die Bestromung derart ausgeführt, dass die an der Oberfläche des Belagträgers entstehende Hartschicht eine keramische Schicht ist. Da das Walzen das Material plastisch nur verformt, insbesondere also ohne Rissebildung und dergleichen, ist die keramisierte dünne Schicht optimal angebunden und kann auch besonders hoher Krafteinwirkung standhalten. Außerdem ist das gewalzte Blech mit einer geringen Schichtdicke von beispielsweise einigen mm ausführbar. Somit ist das Blech selbst elastisch und kann Kräfte aufnehmen. Da ein dünnes Blech verwendbar ist, weist der Belagträger nur ein geringes Trägheitsmoment auf. Der Belagträger ist drehfest mit der Rotorwelle verbunden, vorzugsweise mittels einer Innenverzahnung.

Alternativ ist der Belagträger drehend bearbeitet. Auf diese Weise ist eine Mitnehmer-Innenverzahnung einfach einbringbar zur formschlüssigen Verbindung mit einer

Außenverzahnung der Bremsrotorwelle. Dabei sind im Belagträger Ausnehmungen zur Reduzierung der Massenträgheit einbringbar. Diese sind axiale und/oder radiale Materialrücknahmen oder axial durchgehende Löcher realisierbar.

Somit ist der Belagträger insgesamt sehr dünn ausführbar und es ist eine geringe Massenträgheit erreichbar.

Der Belagträger ist wiederum formschlüssig mit der Bremswelle verbunden.

Bei weiteren erfindungsgemäßen Ausführungsbeispielen wird statt des Grundwerkstoffes Aluminium für den Belagträger ein Stahl verwendet. Die anodische Oxidation wird entsprechend angepasst.

## Patentansprüche

1. Elektromagnetisch betätigbare Bremse oder Kupplung mit Belagträger,
wobei der Belagträger, insbesondere axial gesehen, einseitig oder beidseitig einen Bremsbelag aufweist,
wobei der Bremsbelag als gehärtete Schicht des Bremsbelagträgers vorgesehen ist,
wobei der Belagträger einstückig aus einem Grundmaterial gefertigt ist und die gehärtete Schicht durch Oxidation des Grundmaterials erzeugt ist, so dass die gehärtete Schicht eine keramisierte Schicht oder eine Keramikschicht ist,
wobei die gehärtete Schicht eine Schichtdicke zwischen 10 und 100µm aufweist, **dadurch gekennzeichnet, dass**
das Grundmaterial ein gewalztes Blech ist, aus dem der Belagträger ausgestanzt ist,
wobei die Oxidation eine anodische Oxidation in einem gekühlten Säureelektrolyten ist,
wobei der Bremsbelag zum Reibkontakt mit einem Stahlteil oder einem Keramikteil verwendet ist,
wobei der Belagträger eine Innenverzahnung zur formschlüssigen und/oder drehfesten Verbindung mit einer Welle der Bremse oder Kupplung aufweist.

2. **Elektromagnetisch betätigbare Bremse oder Kupplung mit Belagträger** nach mindestens einem der vorangegangenen Ansprüche,
**dadurch gekennzeichnet, dass**
**wobei die gehärtete Schicht eine Schichtdicke zwischen 10 und 60µm aufweist, insbesondere zwischen 20 bis 40 µm.**

3. **Elektromagnetisch betätigbare Bremse oder Kupplung mit Belagträger** nach mindestens einem der vorangegangenen Ansprüche,
**dadurch gekennzeichnet, dass**
das Grundmaterial insbesondere Aluminium, Stahl oder eine Stahllegierung ist.

4. **Elektromagnetisch betätigbare Bremse oder Kupplung mit Belagträger** nach mindestens einem der vorangegangenen Ansprüche,
**dadurch gekennzeichnet, dass**
der Belagträger mindestens einen Bremsbelag zum Reibkontakt mit Reibpartnern, wie Ankerscheibe und/oder ein weiteres Teil, aufweist,
**wobei** der Bremsbelag als gehärtete Schicht des Bremsbelagträgers vorgesehen ist,
**wobei bei stromloser Bremsspule der Belagträger von einer von Federn beaufschlagten Ankerscheibe gegen ein eine Bremsfläche aufweisendes Teil, insbesondere Bremslagerschild, gedrückt wird,**
**wobei zumindest die Ankerscheibe und das weitere Teil, insbesondere Bremslagerschild, zur Abfuhr der Bremswärme und entsprechend wärmeleitend mit der Umgebung oder zumindest einem Gehäuseteil vorgesehen ist,**
**wobei der Belagträger mit einer Welle der Bremse oder der Kupplung drehfest und/oder formschlüssig verbunden ist,**
**wobei der Belagträger einstückig gefertigt ist, wobei die gehärtete Schicht mittels eines Härteverfahrens hergestellt ist.**

5. Elektromotor mit Bremse oder Kupplung **nach Anspruch 4,**
**dadurch gekennzeichnet, dass**
ein Belagträger mit der Rotorwelle des Elektromotors drehfest verbunden ist,
wobei der Belagträger beim Einfallen der Bremse oder Kupplung in Wirkverbindung mit dem Bremslagerschild tritt.

## Claims

1. An electromagnetically actuatable brake or coupling with lining carrier,
wherein the lining carrier, in particular when viewed axially, has a brake lining on one side or on both sides,
wherein the brake lining is provided as a hardened layer of the brake lining carrier,
wherein the lining carrier is manufactured in one piece from a basic material and the hardened layer is produced by oxidation of the basic material, so that the hardened layer is a ceramised layer or a ceramic layer,
wherein the hardened layer has a layer thickness between 10 and 100 µm,
**characterised in that**
the basic material is a rolled metal sheet, out of which the lining carrier is punched,
the oxidation being anodic oxidation in a cooled acid electrolyte,
the brake lining being used for frictional contact with a steel part or a ceramic part,
the lining carrier having internal teeth for positive and/or torsion-resistant connection with a shaft of the brake or coupling.

2. An electromagnetically actuatable brake or coupling with lining carrier according to at least one of the preceding claims,
**characterised in that**
the hardened layer having a layer thickness between 10 and 60 µm, in particular between 20 and 40 µm.

3. An electromagnetically actuatable brake or coupling with lining carrier according to at least one of the preceding claims,
**characterised in that**
the basic material is in particular aluminium, steel or a steel alloy.

4. An electromagnetically actuatable brake or coupling with lining carrier according to at least one of the preceding claims,
**characterised in that**
the lining carrier has at least one brake lining for frictional contact with friction partners, such as an armature disc and/or a further part,
the brake lining being provided as a hardened layer of the brake lining carrier,
when the brake coil is current-less, the lining carrier being pressed by a spring-loaded armature disc against a part having a braking surface, in particular a brake end shield,
at least the armature disc and the further part, in particular brake end shield, being provided for dissipating the braking heat and being provided correspondingly in heat-conducting manner with the environment or at least one casing part,
the lining carrier being connected to a shaft of the brake or the coupling in torque-resistant manner and/or in positive manner,
the lining carrier being manufactured in one piece, the hardened layer being produced by means of a hardening process.

5. An electric motor with brake or coupling according to Claim 4,
**characterised in that**
a lining carrier is connected to the rotor shaft of the electric motor in torque-resistant manner,
the lining carrier upon application of the brake or coupling coming into operative connection with the brake end shield.

## Revendications

1. Frein ou embrayage à actionnement électromagnétique avec support de garniture,
sachant que le support de garniture présente, considéré notamment axialement, une garniture de frein sur un côté ou sur les deux côtés,
sachant que la garniture de frein est prévue sous la forme d'une couche trempée du support de garniture de frein,
sachant que le support de garniture est fabriqué d'un seul tenant en un matériau de base et que la couche trempée est produite par oxydation du matériau de base, de sorte que la couche trempée est une couche céramisée ou une couche céramique,
sachant que la couche trempée présente une épaisseur de couche comprise entre 10 et 100 µm
**caractérisé en ce que** le matériau de base est une tôle laminée dans laquelle est découpé le support de garniture,
sachant que l'oxydation est une oxydation anodique dans un électrolyte acide refroidi, sachant que la garniture de frein est utilisée pour le contact par friction avec un élément en acier ou un élément céramique,
sachant que le support de garniture présente une denture intérieure pour la liaison en engagement positif et/ou en solidarité de rotation à un arbre du frein ou de l'embrayage.

2. Frein ou embrayage à actionnement électromagnétique avec support de garniture selon la revendication 1, **caractérisé en ce que** la couche trempée présente une épaisseur de couche comprise entre 10 et 60 µm, notamment entre 20 et 40 µm.

3. Frein ou embrayage à actionnement électromagnétique avec support de garniture selon au moins une des revendications précédentes, **caractérisé en ce que** le matériau de base est notamment de l'aluminium, de l'acier ou un alliage d'acier.

4. Frein ou embrayage à actionnement électromagnétique avec support de garniture selon au moins une des revendications précédentes, **caractérisé en ce que** le support de garniture présente au moins une garniture de frein destinée au contact par friction avec des partenaires de friction, comme un disque d'induit et/ou un autre élément,
sachant que la garniture de frein est prévue sous la forme d'une couche trempée du support de garniture de frein,
sachant que, la bobine de frein étant hors tension, le support de garniture est pressé par un disque d'induit sollicité par des ressorts contre un élément, en particulier un flasque de frein, présentant une surface de freinage,
sachant qu'au moins le disque d'induit et l'autre élément, en particulier le flasque de frein, sont prévus pour dissiper la chaleur de freinage et donc en liaison thermoconductrice avec l'environnement ou au moins un élément de boîtier,
sachant que le support de garniture est lié en solidarité de rotation et/ou en engagement positif à un arbre du frein ou de l'embrayage,
sachant que le support de garniture est fabriqué d'un seul tenant, sachant que la couche trempée est réalisée au moyen d'un procédé de trempe.

5. Moteur électrique avec frein ou embrayage selon la revendication 4, **caractérisé en ce qu'**un support de garniture est lié en solidarité de rotation à l'arbre de rotor du moteur électrique,
sachant que le support de garniture entre en liaison fonctionnelle avec le flasque de frein lors de l'entrée en action du frein ou de l'embrayage.
